# EUROPÄISCHE PATENTSCHRIFT

(11) **EP 3 261 830 B1**
(45) Veröffentlichungstag und Bekanntmachung des Hinweises auf die Patenterteilung: **04.08.2021**
(21) Anmeldenummer: 15804821.5
(22) Anmeldetag: 07.12.2015
(51) Int. Cl.: B29D 30/38, B29D 30/06, B29C 33/38, B29C 33/42, B22C 9/00

(54) **VERFAHREN ZUR HERSTELLUNG EINES PROFILSEGMENTES EINER SEGMENTIERTEN GIESS-VULKANISIERFORM FÜR FAHRZEUGREIFEN**
A METHOD FOR PRODUCING A PROFILE SEGMENT OF A SEGMENTED CASTING-VULCANIZING MOULD FOR VEHICLE TYRES
PROCÉDÉ DE FABRICATION D'UN SEGMENT PROFILÉ D'UN MOULE DE VULCANISATION SEGMENTÉ OBTENU PAR COULÉE DESTINÉ À DES PNEUS DE VÉHICULES

(30) Priorität: 23.02.2015 DE 102015203212
(43) Veröffentlichungstag der Anmeldung: 03.01.2018
(73) Patentinhaber: Continental Reifen Deutschland GmbH, 30165 Hannover (DE)
(72) Erfinder: WENZEL, Karsten, 31691 Helpsen (DE); HASSELLÖF, Magnus, 30161 Hannover (DE)
(74) Vertreter: Continental Corporation
(86) Internationale Anmeldenummer: PCT/EP2015/078748
(87) Internationale Veröffentlichungsnummer: WO 2016/134798

(56) Entgegenhaltungen:
- EP-A1- 1 506 850
- EP-A1- 2 085 201
- EP-A1- 2 711 153
- WO-A1-2010/096072
- JP-A- 2001 150 444
- US-A- 5 431 873
- None

## Beschreibung

Die Erfindung betrifft ein Verfahren zur Herstellung eines Profilsegmentes einer segmentierten Vulkanisierform für Fahrzeugreifen, dessen Formfläche ein Segment des Laufstreifenprofils eines zu vulkanisierenden Reifens formt, mit folgenden Schritten:
- Erstellen eines starren Modellsegmentes, welches eine mantelförmige Laufstreifenoberfläche aufweist
- Fräsen des Profilpositivs des Laufstreifens in die mantelförmige Laufstreifenoberfläche des Modellsegmentes zum Erhalt des Urmodells
- Erstellen eines flexiblen Abdruckes aus vorzugsweise Silikonkautschuk von dem Urmodell
- Erstellen eines starren Abgusses aus Gips von dem Abdruck aus vorzugsweise Silikonkautschuk zur Bildung eines Gießkernsegmentes
- Abgießen aller ringkreisförmig aneinandergesetzter Gießkernsegmente mit einer Aluminium-Magnesium-Legierung zum Erhalt einer Vulkanisierform, welche man anschließend wiederum in einzelne Profilsegmente teilt.

Die Erfindung betrifft ferner eine Vulkanisierform und einen Fahrzeugreifen.

Ein Verfahren zur Herstellung eines Profilsegmentes einer segmentierten Guss-Vulkanisierform gemäß dem Oberbegriff ist aus der WO 2010/096072A1 bekannt geworden.

Vulkanisierformen für Reifen bestehen unter anderem aus Formteilen, welche gemeinsam die radial äußere Oberfläche des Reifens wie den Laufstreifen, den Schulterbereich, die Seitenwände und den Wulstbereich formen. Die Segmente, welche den Laufstreifen formen, werden Profil- oder Formsegmente genannt.

Der Begriff "Profilpositiv" umfasst sämtliche Einschnitte des Profils sowie mögliche weitere Einschnitte wie solche für das Einsetzen von Lamellenblechen für PKW- und Vanreifen.

Die Formsegmente von Vulkanisierformen für Reifen sind aus Aluminium und Metall gefertigt. Dem Fachmann sind durch Gießverfahren hergestellte Vulkanisierformen und das vorbeschriebene Verfahren zum Erhalt einer Gießform hinreichend bekannt.

Der unvulkanisierte grüne Reifenrohling wird in der Vulkanisierform vulkanisiert und durch Kautschukvernetzungsreaktionen in seinen endgültigen gummielastischen Zustand überführt. Dabei erhält der Reifen seine Profilgestaltung durch die entsprechende Negativgestaltung der Formflächen der Formsegmente.
Unter Formflächen sind diejenigen Flächen der Formsegmente gemeint, die dem Reifenrohling seine entsprechende Gestaltung geben.

Für die Reifenperformance, insbesondere für die Schnee- und Eisperformance von Winterreifen ist es vorteilhaft, wenn die mantelförmige Oberfläche des ReifenLaufstreifens eine definierte Rauigkeit aufweist. Die Rillen des Laufstreifenprofiles, welche die erhabenen Profilelemente begrenzen, sollen hingegen möglichst "glatt" sein, um dem Reifen eine hohe Qualitätsanmutung zu verleihen.

Ferner ist es aus der EP 2 234 782 B2 der Anmelderin bekannt, dass die Formflächen der Profilsegmente der Vulkanisierform eine Plasmabeschichtung mit einer definierten Rauigkeit aufweisen. Der mit dieser Vulkanisierform vulkanisierte Reifenlaufstreifen weist aufgrund des Abdruckes der Plasmabeschichtung ebenfalls eine definierte Rauigkeit und eine dadurch verbesserte Performance auf. Eine geeignete Plasmabeschichtung sowie die damit erzielten Vorteile sind in der vorgenannten Druckschrift beschrieben.

Jedoch ist es aufwändig, jede fertig hergestellte Vulkanisierform nachträglich mit einer geeigneten Plasmabeschichtung zu versehen. Insbesondere, wenn die erhabenen Stege der Formfläche, welche die Rillen des Reifenlaufstreifens formen, nicht mit der die Rauigkeit aufweisenden Plasmabeschichtung versehen sein sollen.

Es ist daher die Aufgabe der Erfindung, ein einfaches und kostengünstiges Verfahren zur Herstellung eines Profilsegmentes einer segmentierten Gieß-Vulkanisierform für Fahrzeugreifen zur Verfügung zu stellen, mit welchem die mantelförmige Laufstreifenoberfläche eines zu vulkanisierenden Reifens mit einer definierten Rauigkeit zu versehen ist, während die Stege, welche die Rillen in den Reifenlaufstreifen prägen, "glatt" ausgeführt sein sollen.

Die Aufgabe wird gelöst, indem man eine Plasmabeschichtung auf den Laufstreifen des Modellsegmentes aufträgt, in welches anschließend das Profilpositiv des Laufstreifens zum Erhalt des Urmodells gefräst wird, wobei die Plasmabeschichtung derart ausgelegt ist, dass diese dem Urmodell eine definierte Rauigkeit verleiht.

Dieses Verfahren ist kostengünstig und einfach. Das Urmodell erhält die Rauigkeit, welche sich durch die weiteren bekannten Abdruck- und Abgussverfahrensschritte bis auf die endgültige Vulkanisierform überträgt. Vom flexiblen Abdruck aus vorzugsweise Silikonkautschuk sind beliebig viele Abgüsse aus Gips zum Erhalt des Gießkernes zu erhalten. Somit muss nur ein Mal eine Plasmabeschichtung mit definierter Rauigkeit aufgebracht werden, von dem viele Profilsegmente mit rauer Laufstreifenoberfläche zu erhalten sind. Da das Profil erst nach dem Aufbringen der Plasmabeschichtung auf das Modellsegment in dieses hineingefräst wird, sind die nachträglich gefrästen Rillen und sonstigen Aussparungen nicht mit der Plasmabeschichtung versehen, sondern "glatt". Zu berücksichtigen ist, dass sich durch die Abdruck- und Abgussverfahren die Rautiefe vom Urmodell bis zu dem vulkanisierten Reifen verringert. Daher ist die Rauigkeit des Urmodells so zu wählen, dass die erwünschte Endrauigkeit am vulkanisierten Reifen zu erhalten ist.

"Glatt" meint eine Rauigkeit mit einer Rautiefe ≤ 3 µm, gemessen am vulkanisierten Neureifen, welcher mit einer gemäß dem erfindungsgemäßen Verfahren hergestellten Vulkanisierform vulkanisiert ist.

Es hat sich gezeigt, dass die besten Ergebnisse in Bezug auf die Performance des mit der Vulkanisierform vulkanisierten Fahrzeugneureifens, insbesondere die Schnee- und Eisperformance von Winterreifen, durch eine Rauigkeit mit einem Oberflächenprofil von 5 - 50 µm, vorzugsweise von 7,5 - 25 µm, besonders vorzugsweise von 10 - 15 µm, am vulkanisierten Fahrzeugreifen im Neuzustand erreicht werden.

Vorteilhaft ist es, wenn man die Plasmabeschichtung durch Applikation einer thermischen Spritzschicht auf das Modell aufträgt. Dieses Verfahren eignet sich besonders gut, um die Oberfläche des Modells zu beschichten und somit eine definierte Rauigkeit auf die Oberfläche in weiteren Verfahrensschritten abgegossenen Profilsegmentes aufzubringen. Vorteilhaft ist es, wenn die thermische Spritzschicht aus einer Matrix und aus in dieser Matrix statistisch verteilten Spritzzusätzen besteht, wobei die Spritzzusätze die Rauigkeit bestimmen. Die Spritzzusätze können Körner sein, die beispielsweise in Bezug auf ihre Korngröße, ihre Struktur, ihre äußere Korngestalt und ihre Härte entsprechend der für die Spritzschicht erwünschten Eigenschaften auswählbar sind. Es ist eine Möglichkeit geschaffen, die erwünschte Rauigkeit durch die Auswahl einer geeigneten thermischen Spritzschicht, insbesondere durch die Spritzzusatzwahl, einzustellen.

Zudem kann ebenfalls der Matrixwerkstoff entsprechend der erwünschten Eigenschaften gewählt werden.

Somit sind die Eigenschaften der thermischen Spritzschicht durch wählbare Parameter der Matrix und/oder der Spritzzusätze beeinflussbar, so dass deren Rauigkeitsstruktur einstellbar ist.

## Patentansprüche

1. Verfahren zur Herstellung eines Profilsegmentes einer segmentierten Guss-Vulkanisierform für Fahrzeugreifen, dessen Formfläche ein Segment des Laufstreifenprofils eines zu vulkanisierenden Reifens formt, mit folgenden Schritten:
- Erstellen eines starren Modellsegmentes, welches eine mantelförmige Laufstreifenoberfläche aufweist
- Fräsen des Profilpositivs des Laufstreifens in die mantelförmige Laufstreifenoberfläche des Modellsegmentes zum Erhalt des Urmodells
- Erstellen eines flexiblen Abdruckes aus vorzugsweise Silikonkautschuk von dem Urmodell
- Erstellen eines starren Abgusses aus Gips von dem Abdruck aus vorzugsweise Silikonkautschuk zur Bildung eines Gießkernsegmentes
- Abgießen aller ringkreisförmigen aneinandergesetzter Gießkernsegmente mit einer Aluminium-Magnesium-Legierung zum Erhalt einer Vulkanisierform, welche man anschließend wiederum in einzelne Profilsegmente teilt,
**dadurch gekennzeichnet, dass**
man eine Plasmabeschichtung auf den Laufstreifen des Modellsegmentes aufträgt, in welches anschließend das Profilpositiv des Laufstreifens zum Erhalt des Urmodells gefräst wird, wobei die Plasmabeschichtung derart ausgelegt ist, dass diese dem Urmodell eine definierte Rauigkeit verleiht.

2. Verfahren nach Anspruch 1, **dadurch gekennzeichnet, dass** die Rauigkeit der Plasmabeschichtung so gewählt ist, dass ein Oberflächenprofil von 5 - 50 µm, vorzugsweise von 7,5 - 25 µm, besonders vorzugsweise von 10 - 15 µm am vulkanisierten Fahrzeugreifen erhalten ist.

3. Verfahren nach einem oder mehreren der vorangehenden Ansprüche,
**dadurch gekennzeichnet, dass** man die Plasmabeschichtung durch Applikation einer thermischen Spritzschicht aufträgt.

## Claims

1. Method for manufacturing a profile segment of a segmented casting-vulcanizing mold for vehicle tires, the molding area of which forms a segment of the tread profile of a tire to be vulcanized, comprising the following steps:
- producing a rigid model segment which has a casing-shaped tread surface
- milling the profile positive of the tread into the casing-shaped tread surface of the model segment in order to obtain the master model
- producing a flexible imprint preferably made of silicone rubber from the master model
- producing a rigid casting made of plaster from the imprint preferably made of silicone rubber in order to form a casting core segment
- casting all the annular casting core segments placed one against the other with an aluminum-magnesium alloy in order to obtain a vulcanizing mold which is in turn subsequently divided into individual profile segments,
**characterized in that**
a plasma coating is applied to the tread of the model segment, into which the profile positive of the tread is subsequently milled in order to obtain the master model, wherein the plasma coating is configured in such a way that it gives the master model a certain degree of roughness.

2. Method according to Claim 1, **characterized in that** the roughness of the plasma coating is selected in such a way that a surface profile of 5 - 50 µm, preferably of 7.5 - 25 µm, and particularly preferably of 10 - 15 µm is obtained on the vulcanized vehicle tire.

3. Method according to one or more of the preceding claims,
**characterized in that** the plasma coating is applied by applying a thermal sprayed layer.

## Revendications

1. Procédé de fabrication d'un segment profilé d'un moule de vulcanisation segmenté en fonte, destiné à des pneumatiques de véhicule, dont la surface de moule constitue un segment de la sculpture de bande de roulement d'un pneumatique à vulcaniser, comprenant les étapes suivantes consistant à :
- créer un segment de modèle rigide qui présente une surface de bande de roulement en forme d'enveloppe,
- fraiser l'élément de sculpture positif de la bande de roulement dans la surface de bande de roulement en forme d'enveloppe du segment de modèle afin d'obtenir le cliché matrice,
- créer une empreinte flexible, de préférence en caoutchouc silicone, du cliché matrice,
- créer un moulage rigide en plâtre de l'empreinte, de préférence en caoutchouc silicone, pour former un segment de noyau de coulée,
- couler tous les segments de noyau de coulée placés côte à côte en forme d'anneau circulaire avec un alliage aluminium-magnésium afin d'obtenir un moule de vulcanisation qui est ensuite à son tour divisé en segments profilés individuels,
**caractérisé en ce qu'**un revêtement au plasma est appliqué à la bande de roulement du segment de modèle dans lequel ensuite l'élément de sculpture positif de la bande de roulement est fraisé afin d'obtenir le cliché matrice, le revêtement au plasma étant conçu de façon à conférer une rugosité définie au cliché matrice.

2. Procédé selon la revendication 1, **caractérisé en ce que** la rugosité du revêtement au plasma est sélectionnée de façon à obtenir une sculpture de surface de 5 à 50 µm, de préférence de 7,5 à 25 µm, de préférence particulière de 10 à 15 µm sur le pneumatique de véhicule vulcanisé.

3. Procédé selon une ou plusieurs des revendications précédentes, **caractérisé en ce que** le revêtement au plasma est appliqué par l'application d'une couche par pulvérisation thermique.
